(19) Europäisches Patentamt
European Patent Office
Office européen des brevets

(11) EP 4 729 895 A1

(12) **EUROPEAN PATENT APPLICATION**

(43) Date of publication:
**22.04.2026 Bulletin 2026/17**

(21) Application number: **25208625.1**

(22) Date of filing: **14.10.2025**

(51) International Patent Classification (IPC):
*G01H 1/00* (2006.01)

(52) Cooperative Patent Classification (CPC):
**G01H 1/003**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.10.2024 DK PA202430626**

(71) Applicant: **EWA Sensors ApS**
**8600 Silkeborg (DK)**

(72) Inventor: **Kühne, Eva**
**8600 Silkeborg (DK)**

(74) Representative: **Andreasen, Søren Laursen**
**Vasegaard**
**Tropa ApS**
**Aagade 97, 1st Floor**
**8370 Hadsten (DK)**

(54) **METHOD FOR GENERATING A NOTIFICATION SIGNAL OF ROTATING MACHINE AND ROTATING MACHINE CONFIGURED TO CARRY OUT THE METHOD**

(57) A method for generating a notification signal of rotating machine (2), the notification signal being a warning signal (102, 102') or an alarm signal (102, 102') is disclosed. The method comprising:
- determining a baseline ($B_1$, $B_2$, $B_3$, $B_4$) on the basis of a plurality of measurements of a parameter ($P_1$, $P_2$, $P_3$) of the rotating machine (2), wherein the measurements are conducted during a measurement period (time interval) having a predefined duration ($D_1$, $D_2$, $D_3$),
- providing the warning signal (102, 102') or an alarm signal (102, 102') in dependency of the baseline ($B_1$, $B_2$, $B_3$, $B_4$).

The baseline ($B_1$, $B_2$, $B_3$, $B_4$) is determined continuously or regularly by using an adaptive filter applied on measurements of the parameter ($P_1$, $P_2$, $P_3$) of the rotating machine (2).

Fig. 2B

EP 4 729 895 A1

## Description

### Field of invention

The present invention relates to a method for generating a notification signal of rotating machine. The present invention also relates to a rotating machine configured to carry out the method.

### Prior art

Rotating machines includes machinery that has moving parts and rotates during operation, such as pumps, compressors, turbines, and motors. To ensure production quality and continuity, the performance of a rotating machine is very important.

The performance can be inspected from both daily operations parameters and faults like revolutions per minute (RPM), unbalance (a mass distribution in rotating bodies that is not rotationally symmetric), slip speed, cavitation, temperature, gear mesh, water hammer, false brinelling, number of starts and stops, duty cycle, rotation directions, vibration Root Mean Square (RMS), operation time, mechanical looseness, false brinelling, bearing fault and from alarm parameters linked thereto, and baseline trending with warning and alarm level.

The daily machine parameters are used to optimize and balance production throughput without harming the rotating machine, where the alarm parameters are used to detect abnormal level and behaviours (abnormally detection) and are more seldom in use.

This kind of parameter separation is seen in many applications like the car dashboard: top dashboard instrumentation is for daily operation (speed, temperature, fuel level), and the bottom instrumentation are alarm parameters (check-engine light, coolant temperature light, Transmission Temperature). When driving a car, we inspect the "daily parameters" to insure and follow the expected operation, and we don't pay attention to alarm parameters not appearing. But when one of the car alarms appears, it is often a serious problem and costly to repair.

Vibration analysis and motor current analysis is used to monitor the condition of rotating equipment and predict machine issues based on data trends over time, abnormal frequencies, or the amplitude of the measured vibration and magnetic field.

The first step to a successful vibration analysis is establishing relevant baseline references and alarm levels, as to help identifying when the rotating machine is operating normally and when there is a fault/operation issue.

Vibration analysts typically use a couple of the following five reference methods to quantity and severity evaluate a machine installation:

1. Baseline readings from the installation time.
2. Generic severity charts from ISO, ANSI etc.
3. Equipment manufacturer's recommendation.
4. Statistical Data analysis from a large population of the same type of machinery.
5. Experience.
6. Route based vibration data collector (handheld instruments).

In classical vibration analysis, baselines are established by measuring the vibration of a machine when it is in good condition. The initial vibration levels at the sensor installation are recorded and used as a reference point for future measurements. By comparing the current vibration levels to the established baselines, maintenance personnel can identify trends indicating changes in a machine behaviour. This information can be used to predict when a machine is likely to fail, allowing for proactive maintenance.

A static fixed-value baseline approach has some practical challenges:

- Choosing the correct time to make the baseline measurement (considering machine loads, seasonal variations over winter and summer etc.). It the baseline is set too low, it will provide false alarm, and is the baseline set too high, it will make the system blind.
- Drift of parameters related to aging and normal wear.
- New baselines are required after each machine overhaul and major service.

Regarding warning and alarm levels, it is generally believed that in the absence of other specific information a doubling of an acceptable vibration level is an indicator of trouble, and a tripling of the level is cause for major concern. The factor setting of 2 for warning level and a factor of 3 for alarm level are completely aligned with the levels given by the ISO 20816 generic severity chart. Some parameters, however, are treated differently due to the expected range. A warning or an alarm based om temperature measurements, by way of example, would typically be generated on the basis of a smaller deviation from a baseline level. On the other hand, a warning or an alarm based om cavitation og bearing fault related measurements, would typically be generated on the basis of a larger deviation from a baseline level.

Thus, there is a need for a method and rotating machine which reduces or even eliminates the above mentioned disadvantages of the prior art.

**Summary of the invention**

The object of the present invention can be achieved by a method as defined in claim 1, by a rotating machine as defined in claim 12 and by a system as defined in claim 13. Preferred embodiments are defined in the dependent subclaims, explained in the following description and illustrated in the accompanying drawings.

The method according to the invention is a method for generating a notification signal of rotating machine, the notification signal being a warning signal or an alarm signal, wherein the method comprising:

- by using a detection unit comprising an accelerometer arranged and configured to detect vibrations and/or a detection unit configured to detect magnetic signals determining an initial baseline on the basis of a plurality of measurements of at least one parameter of the rotating machine detectable by using the accelerometer or the detection unit, wherein the measurements are conducted during a measurement period (time interval) having a predefined duration,
- calculating a warning level ($L_{DW}$) or an alarm level ($L_{SA}$, $L_{DA}$),
- after having determined the initial baseline ($B_{INIT}$), conducting additional measurements of the parameter ($P_1$, $P_2$, $P_3$) of the rotating machine (2),
- providing the warning signal or the alarm signal if the parameter ($P_1$, $P_2$, $P_3$) exceeds the warning level ($L_{DW}$) or the alarm level ($L_{SA}$, $L_{DA}$), respectively;

wherein method comprising:

a) after having determined the initial baseline ($B_{INIT}$), continuously or regularly determining a dynamic baseline (B) on the basis of the measurements of the parameter ($P_1$, $P_2$, $P_3$) and
b) calculating a warning level ($L_{DW}$) or an alarm level ($L_{SA}$, $L_{DA}$) on the basis of the dynamic baseline (B).

Hereby, it is possible to provide a method which reduces or even eliminates the disadvantages of the prior art. The method uses a dynamic baseline approach, where the baseline is adapting rigid and slowly to the measured parameter.

The method has the following advantages:

- The baseline will adapt to normal machine aging and wear.
- Baseline tracking can be activated at the time of installation, and any deviation related to wrong timing will slowly be corrected within a short period of time (e.g. within a week).
- New parameter levels due to a service visit will automatically initiate an adjustment of the baseline.

In one embodiment, the method as a last line of defence, determines whether the measured parameter exceeds a static alarm level defined as four times the initial baseline.

In an embodiment, the initial baseline is generated on the basis of measurements conducted within the first 1-24 hours of machine operation. In an embodiment, the initial baseline is generated on the basis of measurements conducted within the first 12 hours of machine operation.

In an embodiment, the method is capable of generating a warning signal. The warning signal is generated when the measured parameter exceeds a dynamic warning level. In one embodiment, the method comprising: upon generating a warning signal, wirelessly sending the warning signal to an external receiving member.

In an embodiment, the method is capable of generating an alarm signal. The warning signal is generated when the measured parameter exceeds a dynamic alarm level. In one embodiment, the method comprising: upon generating a warning signal, wirelessly sending the warning signal to an external receiving member.

The baseline for one parameter is determined on the basis of a plurality of measurements of the least one parameter of the rotating machine, wherein the measurements are conducted during a measurement period (time interval) having a predefined duration.

In an embodiment, the magnetic signals detected by the detection unit are magnetic signals are generated by an electrical motor. Such magnetic signals may include a rotating magnetic field around the stator. This may be a rotating field produced by the stator windings carrying AC currents. It may be synchronous frequency (e.g. 50 Hz, 60 Hz, or variable if driven by an inverter).

The magnetic signals may be (slot harmonics) caused by the interaction of rotor slots and stator slots. These may be useful for detecting mechanical faults such as broken rotor bars.

The magnetic signals may be rotor frequency signals. In induction motors: rotor currents induce their own magnetic field at the slip frequency. In permanent magnet motors: rotor magnets generate a DC (in rotor frame) field, visible as a rotating field in the stator frame.

The magnetic signals may be fault-related magnetic signals such as:

- unbalanced magnetic pull (due to eccentricity, misalignment, air-gap variation);
- inter-turn short circuits cause asymmetry in the magnetic field or
- bearing faults may modulate the magnetic field due to rotor movement.

In an embodiment, the detection unit comprises at least one Hall effect sensor arranged to detect the magnetic field generated by the motor creates a varying magnetic flux.

In an embodiment, the detection unit comprises one or more coils arranged to generate current through induction when the magnetic field generated by the motor creates a varying magnetic flux through a region of space enclosed the one or more coils. Accordingly, the one or more coils will generate current due to the varying magnetic field caused by the motor.

In an embodiment, the detection unit comprises two or more coils, wherein the coils have different orientation relative to each other. In an embodiment, the coils extend perpendicular to each other.

In an embodiment, the detection unit is detachably attached to the rotating machine.

In an embodiment, the rotating machine is rotating machine is driven by an electric motor.

In an embodiment, the initial baseline is established during a measurement period (time interval) having a predefined duration in the range of 1-8 hours.

In an embodiment, the initial baseline is established during a measurement period (time interval) having a predefined duration in the range of 5-360 minutes.

In an embodiment, the initial baseline is established during a measurement period (time interval) having a predefined duration in the range of 8-24 hours.

In an embodiment, the initial baseline is established during a measurement period (time interval) having a predefined duration in the range of 1-7 days.

When the initial baseline has been established, a time dependent baseline is established on a continuous or regular basis. In an embodiment, the time dependent baseline is established once every 1 minute. In an embodiment, the time dependent baseline is established once every 15 minutes. In an embodiment, the time dependent baseline is established once every 30 seconds. In an embodiment, the time dependent baseline is established once every 10 seconds. In an embodiment, the time dependent baseline is established in the range once every 1-8 seconds. In an embodiment, the time dependent baseline is established in the range once every 0.1-2 seconds of more frequently.

In an embodiment, the method comprising:

- transmitting data to an external receiver by using a MODBUS client/server data communications protocol.

It may be an advantage to use MODBUS because it is openly published and royalty-free, developed for industrial applications. Moreover it is easy to deploy and maintain compared to other standards.

In an embodiment, the method comprising sampling data with a frequency of sampling in the range 1-50 kHz. In an embodiment, the frequency of sampling is 2 kHz. In an embodiment, the frequency of sampling is 8 Hz. In an embodiment, the frequency of sampling is 32 kHz.

In an embodiment, the detection unit is a non-invasively and detachably installed detection unit.

In an embodiment, the vibrations of the liquid guiding system are measured as high frequencies in the range 8-16 Hz.

It is essential that the method comprising: providing the dynamic warning signal or a dynamic alarm signal in dependency of the baseline.

As the baseline typically changes over time, the warning level or an alarm signal will typically also change over time.

The baseline for one parameter is determined continuously or regularly by using an adaptive filter applied on measurements of the parameter of the rotating machine.

In an embodiment, the adaptive filter is a filter configured to reduce the influence of extreme values that differ more than a predefined percentage from a recently determined baseline.

In an embodiment, the adaptive filter is a filter configured to reduce the influence of extreme values that differ more than a predefined percentage from the most recently determined baseline.

In an embodiment, the method comprising application of using an adaptive filter to remove one or more measurements of the parameter categorized as extreme values that differ more than a predefined level from the dynamic baseline.

Hereby, it is possible to prevent that a false alarm is generated.

In an embodiment, the adaptive filter is a filter configured to reduce the influence of extreme values that differ more than a predefined percentage from a sum given by a weighted average of predefined number of most recently determined baselines.

In an embodiment, the adaptive filter is a filter configured to reduce the influence of extreme values that differ more than a predefined percentage from a sum given by:

> a) a first constant times the most recently determined baseline;
> b) a second constant times the second most recently determined baseline.

In an embodiment, the adaptive filter is a filter configured to reduce the influence of extreme values that differ more than a predefined percentage from a sum given by:

> a) a first constant times the most recently determined baseline;
> b) a second constant times the second most recently determined baseline;
> c) a third constant times the third most recently determined baseline.

In an embodiment, the adaptive filter is a trimmed moving average.

In an embodiment, the adaptive filter is a winsorized moving average.

In an embodiment, the adaptive filter is a weighted moving average or a moving average with outlier detection.

In an embodiment, the adaptive filter is a moving average with outlier detection.

In an embodiment, if the time for a time period $(T_{DW})$ during which the parameter has been below the warning level $(L_{DW})$, exceeds the predefined time period $T_{DWP}$, no warning signal is generated.

In an embodiment, if the time for a time period $(T_{DA})$ during which the parameter has been below the alarm level $(L_{DA})$, exceeds the predefined time period $T_{SAP}$, no alarm signal is generated.

In an embodiment, if the time for a time period $(T_{SA})$ during which the parameter) has been below the static level $(L_{SA})$, exceeds the predefined time period $T_{SAP}$, no static alarm signal is generated.

In an embodiment, if the time for a Normal Period $(T_N)$ during which the parameter has been below the warning level $(L_{DW})$ or the alarm level $(L_{SA}, L_{DA})$, respectively, exceeds the predefined time period $T_{NP}$, no alarm or warning is generated.

In an embodiment, the parameter is unbalance (a mass distribution in rotating bodies that is not rotationally symmetric).

In an embodiment, the parameter is bearing fault detection.

In an embodiment, the parameter is cavitation.

In an embodiment, the parameter is temperature.

In an embodiment, the parameter is vibration Root Mean Square with respect to a first axis (X) of the rotating machine.

In an embodiment, the parameter is vibration Root Mean Square with respect to a second axis (Y) of the rotating machine, the second axis (Y) extending perpendicular to the first axis (X).

In an embodiment, the parameter is vibration Root Mean Square with respect to a third axis (Z) of the rotating machine (2), the third axis (Z) extending perpendicular to the first axis (X) and the second axis (Y).

In an embodiment, the parameter is Gear Mesh Frequency.

In an embodiment, the parameter is water hammer.

In an embodiment, the parameter is false brinelling.

In an embodiment, the parameter is mechanical looseness.

In an embodiment, the method comprising normalising the measurements with respect to the initial baseline. This approach may be advantageous when warning levels and/or alarm levels for cavitation measurements and bearing fault measurements are generated.

In an embodiment, the method generates a warning level when a predefined number of measurements exceeding a level corresponding to a predefined first constant $C_1$ times the baseline are detected within a predefined period of time $T_1$, wherein the predefined first constant $C_1$ is larger than 1.

In an embodiment, predefined first constant $C_1$ is in the range 1.2-3.

In an embodiment, predefined first constant $C_1$ is in the range 1.6-2.7.

In an embodiment, predefined first constant $C_1$ is in the range 1.8-2.5.

In an embodiment, predefined first constant $C_1$ is in the range 1.9-2.3.

In an embodiment, predefined first constant $C_1$ is 2.

In an embodiment, the dynamic warning level $= A_1 + B_1 B$ (where, B is the baseline and $A_1$ and $B_1$ are constants).

In an embodiment, the dynamic alarm level $= A_2 + B_2 B$ (wherein B is baseline and $A_2$ and $B_2$ are constants).

In an embodiment, the method generates an alarm level when a predefined number of measurements exceeding a predefined second constant $C_2$ times the baseline is detected within a predefined period of time $T_2$, wherein the predefined second constant $C_2$ is larger than the first predefined constant $C_1$.

In an embodiment, predefined second constant $C_2$ is in the range 2-5.

In an embodiment, predefined second constant $C_2$ is in the range 2.2-4.

In an embodiment, predefined second constant $C_2$ is in the range 2.4-3.6. In an embodiment, predefined second constant $C_2$ is in the range 2.6-3.4. In an embodiment, predefined second constant $C_2$ is 3.

In an embodiment, the method generates a static alarm when a predefined number of measurements exceeding a predefined third constant $C_3$ times an initial baseline are detected within a predefined period of time $T_2$, wherein the predefined third constant $C_3$ is larger than 2.

In an embodiment, predefined third constant $C_3$ is in the range 2-6.

In an embodiment, predefined third constant $C_3$ is in the range 3-5.

In an embodiment, predefined third constant $C_3$ is in the range 3.4-4.6.

In an embodiment, predefined third constant $C_3$ is in the range 3.6-4.4.

In an embodiment, predefined third constant $C_3$ is 4.

In an embodiment, the rotating machine is a pump.

The rotating machine according to the invention is a rotating machine configured to carry out the method according to the invention, the rotating machine being configured for generating a notification signal being a warning signal or an alarm signal, wherein rotating machine comprises a detection unit comprising an accelerometer arranged and configured to detect vibrations of the rotating machine and/or a detection unit configured to detect magnetic signals of the rotating machine,

- applying the detection unit to detect vibrations and/or magnetic signals of the rotating machine,

wherein the detection unit or an external device communicatively connected to the detection unit is configured to:

1) determine an initial baseline on the basis of a plurality of measurements of a parameter of the rotating machine, wherein the measurements are conducted during a measurement period having a predefined duration,
2) calculate a warning level or an alarm level,
3) after having determined the initial baseline, conduct additional measurements of the parameter of the rotating machine,
4) provide the warning signal or the alarm signal if the parameter exceeds the warning level or the alarm level, respectively,

wherein the detection unit or an external device communicatively connected to the detection unit is configured to:

a) after having determined the initial baseline, continuously or regularly determining a dynamic baseline on the basis of the measurements of the parameter and
b) calculating a warning level or an alarm level on the basis of the dynamic baseline.

In an embodiment, the detection unit or an external device communicatively connected to the detection unit is configured to is configured to apply an adaptive filter to remove one or more measurements of the parameter categorised as extreme values that differ more than a predefined level from the dynamic baseline.

The system according to the invention is a system comprising:

- a rotating machine according to the invention, wherein the detection unit(s) are configured to wirelessly send data;
- an external receiving member configured to receive data sent by the detection unit(s).

Hereby, the use of the system can be informed when something is wrong (e.g. when a parameter exceeds a dynamic warning level or a dynamic alarm level or static alarm).

## Description of the Drawings

The invention will become more fully understood from the detailed description given herein below. The accompanying drawings are given by way of illustration only, and thus, they are not limitative of the present invention. In the accompanying drawings:

Fig. 1A     shows a graph depicting a parameter of a rotating machine and a baseline determined continuously by using an adaptive filter according to the invention;

Fig. 1B     shows a graph depicting a parameter of a rotating machine and the levels used for static warning and static alarm in a prior art method;

Fig. 2A    shows a graph depicting a parameter of a rotating machine and the levels used for dynamic warning and dynamic alarm in a method according to the invention;

Fig. 2B    shows a graph depicting a parameter of a rotating machine and the levels used for dynamic warning and dynamic alarm in a method according to the invention;

Fig. 3A    shows a graph depicting a parameter of a rotating machine and added static baseline, static warning and alarm limits;

Fig. 3B    shows a graph depicting a parameter of a rotating machine over time due to machine ageing and wear;

Fig. 4A    shows vibration levels (RMS) in one axis for a first pump depicted as function of time;

Fig. 4B    shows vibration levels (RMS) in one axis for a second pump depicted as function of time;

Fig. 4C    shows vibration levels (RMS) in one axis for a first pump depicted as function of time;

Fig. 5A    shows vibration levels (RMS) in one axis for a first pump depicted as function of time;

Fig. 5B    shows vibration levels (RMS) in an axis for a pump depicted as function of time;

Fig. 6A    shows vibration levels (RMS) in a first axis for a first pump depicted as function of time;

Fig. 6B    shows vibration levels (RMS) in a second axis for a first pump depicted as function of time;

Fig. 6C    shows vibration levels (RMS) in a third axis for a first pump depicted as function of time;

Fig. 6D    shows bearing fault of a pump depicted as function of time;

Fig. 6E    shows cavitation in a pump depicted as function of time;

Fig. 7A    shows a flow chart illustrating the principles of a method according to the invention;

Fig. 7B    shows the remaining part of the flow chart shown in Fig. 7A;

Fig. 8A    shows a rotating machine according to the invention;

Fig. 8B    shows a schematic cross-sectional view of a pump housing of a pump of a rotating machine according to the invention;

Fig. 9A    shows a cross-sectional view of a detection unit according to the invention;

Fig. 9B    shows a cross-sectional view of another detection unit according to the invention and

Fig. 9C    shows a cross-sectional view of a further detection unit according to the invention.

## Detailed description of the invention

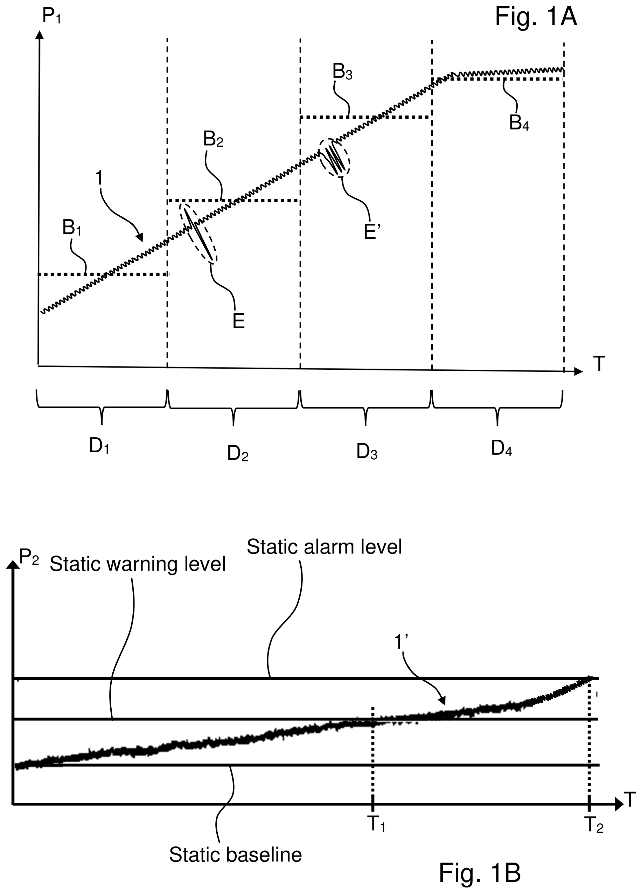

Referring now in detail to the drawings for the purpose of illustrating preferred embodiments of the present invention, a graph 1 depicting a parameter P of a rotating machine 2 of the present invention is illustrated in Fig. 1A.

Fig. 1A illustrates a graph 1 depicting a parameter $P_1$ of a rotating machine as function of time T.

It can be seen that the graph 1 is increasing as function of time during five successive time intervals $D_1, D_2, D_3, D_4$.

During the first time interval $D_1$ a first baseline $B_1$ is determined. In an embodiment, the baseline $B_1$ is determined as the average of the graph 1 during the first time interval $D_1$. In an embodiment, the baseline $B_1$ is determined as a trimmed moving average of the graph 1 during the first time interval $D_1$. In an embodiment, the baseline $B_1$ is determined as a winsorized moving average of the graph 1 during the first time interval $D_1$. In an embodiment, the baseline $B_1$ is determined as a weighted moving average of the graph 1 during the first time interval $D_1$. In an embodiment, the baseline $B_1$ is determined as a moving average with outlier detection of the graph 1 during the first time interval $D_1$.

A baseline $B_1, B_2, B_3, B_4$ is determined for each of the five successive time intervals having predefined durations $D_1, D_2, D_3, D_4, D_5$ by using an adaptive filter according to the invention. Accordingly, the baselines $B_1, B_2, B_3, B_4$ are determined continuously or regularly by using an adaptive filter applied on measurements of the parameter P of the rotating machine.

Each baseline $B_1, B_2, B_3, B_4$ is determined on the basis of a plurality of measurements of the parameter $P_1$, wherein the measurements are conducted during a measurement period having a predefined duration $D_1, D_2, D_3, D_4$.

It can be seen that the graph 1 during the second interval (having a duration $D_2$) has one or more extreme value E. Likewise, during the third interval (having a duration $D_3$) the graph 1 has one or more extreme value E'. By using an adaptive filter configured to reduce the influence of extreme values E, E' that differ more than a predefined percentage $\Delta$ from the most recent determined baseline $B_1, B_2$, it is possible to provide the baselines $B_2, B_3$ illustrated in Fig. 1A. It can be seen that the adaptive filter has reduced or even eliminated the influence of extreme the values E, E'. Accordingly, the adaptive filter can be used to provide baseline determinations that are independent on extreme values E, E' that differ more than a predefined percentage $\Delta$ from the most recent determined baseline $B_1, B_2$. In an embodiment, the predefined percentage $\Delta$ is 50%, predefined percentage $\Delta$ is 25%. In an embodiment, the predefined percentage $\Delta$ is 20%, predefined percentage $\Delta$ is 15%. In an embodiment, the predefined percentage $\Delta$ is 12%, predefined percentage $\Delta$ is 10%.

Fig. 1B illustrates a graph 1' depicting a parameter $P_2$ of a rotating machine and the levels used for static warning and static alarm in a prior art method. Initially graph 1' has values corresponding to a static baseline. The graph 1', however, increases gradually as function of time T. Accordingly, at a first time $T_1$, the graph 1' crosses the static warning level (and a warning would typically be sent to a user or responsible of the rotating machine).

Since the graph 1' continues to increase, at a second time $T_2$, the graph 1' crosses the static alarm level (and an alarm would typically be sent to a user or responsible of the rotating machine). If, however, the baseline was gradually adjusted to meet and correspond to the actual state of the rotating machine (e.g. du to wear of the rotating machine), warnings and alarms based on an outdated baseline can be avoided. The invention solves this problem by applying a method comprising:

- providing a warning signal or an alarm signal in dependency of the baseline, wherein the baseline is a "dynamic" baseline determined continuously or regularly by using an adaptive filter applied on measurements of the parameter $P_2$ of the rotating machine.

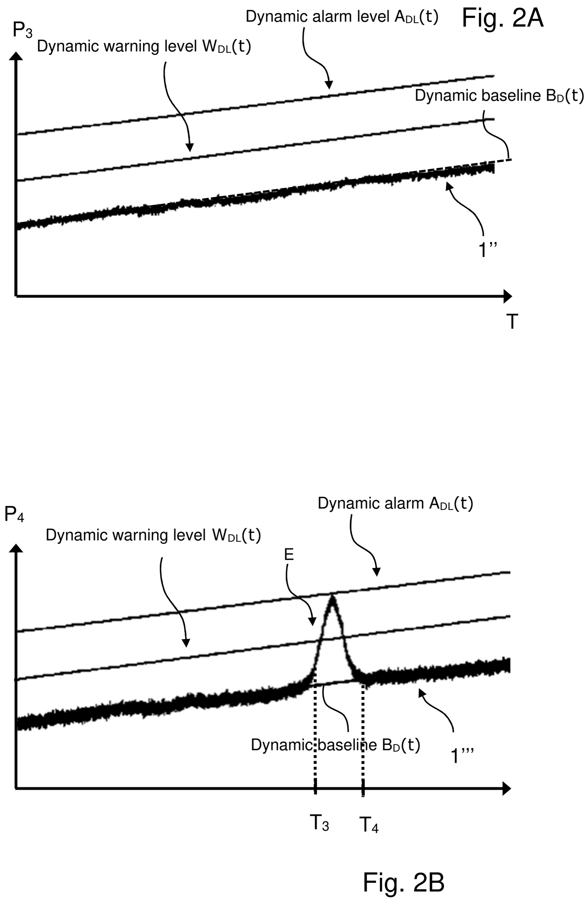

Fig. 2A illustrates a graph 1" depicting a parameter $P_3$ of a rotating machine. A dynamic baseline $B_d(t)$, a dynamic warning level $W_{DL}(t)$ and a dynamic alarm level $A_{DL}(t)$ established by using a method according to the invention are indicated in Fig. 2A.

The graph 1" increases gradually as function of time T. The dynamic baseline $B_D(t)$ is gradually (as function of time T) adjusted to meet and correspond to the actual state of the rotating machine (e.g. du to wear of the rotating machine). Accordingly, dynamic baseline $B_D(t)$ increases concurrently with the graph 1". Accordingly, since the dynamic warning level $W_{DL}(t)$ and the dynamic alarm level $A_{DL}(t)$ depend on the dynamic baseline $B_d(t)$, the dynamic warning level $W_{DL}(t)$ and the dynamic alarm level $A_{DL}(t)$ gradually increase.

In an embodiment, the dynamic warning level $W_{DL}(t)$ is calculated as a constant $C_4$ added to the dynamic baseline $B_D(t)$:

$$(1)\ W_{DL}(t) = B_D(t) + C_4$$

In an embodiment, the dynamic warning level $W_{DL}(t)$ is calculated as a constant $C_1$ times the dynamic baseline $B_D(t)$:

$$(2)\ W_{DL}(t) = C_1\, B_D(t)$$

In an embodiment, the dynamic alarm level $A_{DL}(t)$ is calculated as a constant $C_4$ added to the dynamic baseline $B_D(t)$:

$$(3)\ A_{DL}(t) = B_D(t) + C_5$$

In an embodiment, the dynamic alarm level $A_{DL}(t)$ is calculated as a constant $C_2$ times the dynamic baseline $B_D(t)$:

$$(4)\ A_{DL}(t) = C_2\, B_D(t)$$

Fig. 2B illustrates a graph 1''' depicting a parameter $P_4$ of a rotating machine and the levels used for dynamic warning and dynamic alarm in a method according to the invention.

A dynamic baseline $B_d(t)$, a dynamic warning level $W_{DL}(t)$ and a dynamic alarm level $A_{DL}(t)$ established by using a method according to the invention are indicated in Fig. 2B.

The graph 1''' increases gradually as function of time T. The dynamic baseline $B_D(t)$ is gradually adjusted to meet and correspond to the actual state of the rotating machine (e.g. du to wear of the rotating machine). Accordingly, dynamic baseline $B_D(t)$ increases concurrently with the graph 1'''. Therefore, since the dynamic warning level $W_{DL}(t)$ and the dynamic alarm level $A_{DL}(t)$ depend on the dynamic baseline $B_d(t)$, the dynamic warning level $W_{DL}(t)$ and the dynamic alarm level $A_{DL}(t)$ gradually increase.

At time $T_3$, the derivative of the graph 1''' increases suddenly and a peak (the extreme value E) can be seen. The dynamic baseline $B_D(t)$ is kept steady and does not increase significantly due to the peak because the $B_D(t)$ is determined continuously or regularly by using an adaptive filter that is capable of reducing or even eliminating the influence of extreme values E that differ more than a predefined percentage from the most recent determined baseline.

In an embodiment, the adaptive filter disregards all extreme values E detected during a period if the period has a duration less than a predefined level. In this manner, the adaptive filter prevents that a false alarm is generated. In Fig. 2B, the adaptive filter disregards the extreme values E because the period $T_4$-$T_3$ has a duration less than the predefined level. In an embodiment, the predefined level is in the range 0.5-5 hours. In an embodiment, the predefined level is in the range 1-4 hours. In an embodiment, the predefined level is in the range 1.5-3 hours. In an embodiment, the predefined level is 2 hours.

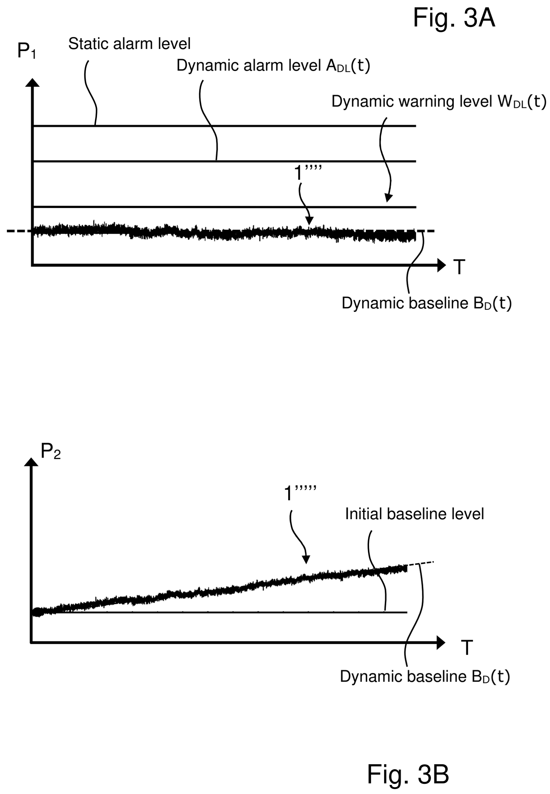

Fig. 3A illustrates a graph 1'''' depicting a parameter $P_1$ of a rotating machine and added dynamic baseline $B_d(t)$, static warning level, dynamic warning level $W_{DL}(t)$ and dynamic alarm level $A_{DL}(t)$.

In this example, the graph 1'''' is basically steady. Accordingly, the dynamic baseline $B_d(t)$, the dynamic warning level $W_{DL}(t)$ and the dynamic alarm level $A_{DL}(t)$ are also basically steady.

The static alarm level (defined on the basis of an initial baseline measurement) is used as an extra safety measure.

In an embodiment, the dynamic warning level $W_{DL}(t)$ is given by:

$$(5)\ W_{DL}(t) = C_1\ B_D(t),$$

where $C_1$ is a constant.

In an embodiment, the constant $C_1$ is in the range 1.2-3. In an embodiment, the constant $C_1$ is in the range 1.5-2.5. In an embodiment, the constant $C_1$ is 2.

In an embodiment, the dynamic alarm level $A_{DL}(t)$ is given by:

$$(6)\ A_{DL}(t) = C_2\ B_D(t),$$

where $C_2$ is a constant.

In an embodiment, the constant $C_2$ is in the range 1.5-4.5. In an embodiment, the constant $C_2$ is in the range 2-4. In an embodiment, the constant $C_2$ is in the range 2.5-3.5. In an embodiment, the constant $C_2$ is 3.

In an embodiment, the static alarm level is given by:

$$(7)\ \text{Static alarm level} = C_3\ \text{times an initial baseline},$$

where $C_3$ is a constant.

In an embodiment, the constant $C_3$ is in the range 2.5-5.5. In an embodiment, the constant $C_3$ is in the range 3-5. In an embodiment, the constant $C_3$ is in the range 3.5-4.5. In an embodiment, the constant $C_3$ is 4.

Fig. 3B illustrates a graph 1''''' depicting a parameter $P_2$ of a rotating machine over time due to machine ageing and wear. It can be seen that the dynamic baseline $B_D(t)$ gradually follows and adapts to the graph 1''''', whereas the initial baseline level is maintained at a fixed level.

Accordingly, a warning level and an alarm level on the initial baseline level becomes more and more critical as the rotating machine ages and becomes worn out. Accordingly, it may be beneficial to apply the method according to the invention as the method take the dynamic baseline $B_D(t)$ into consideration.

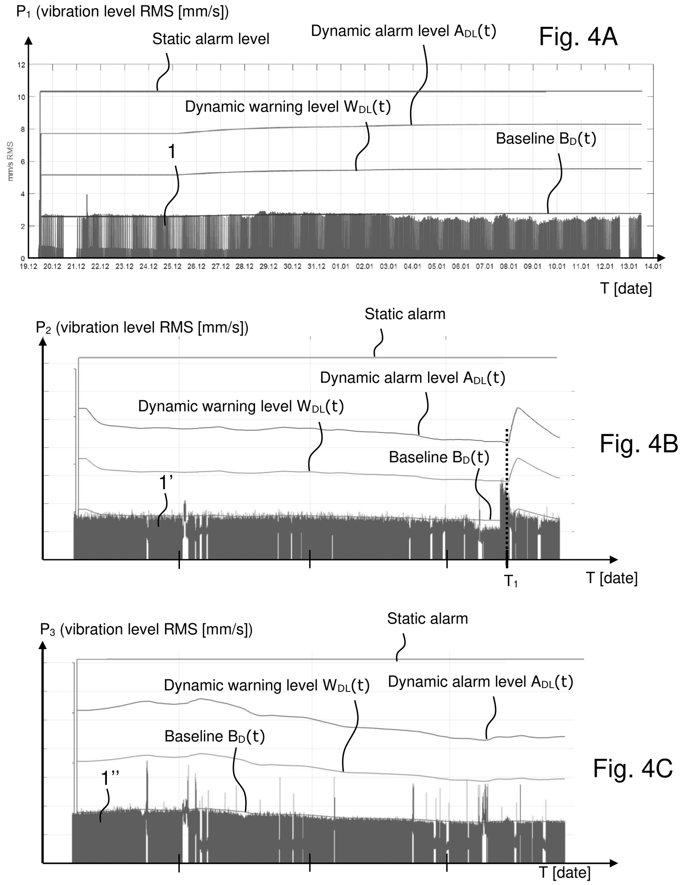

Fig. 4A illustrates a graph 1 depicting a parameter (vibration levels (RMS)) $P_1$ in one axis (e.g. an X axis) for a first pump depicted as function of time T.

The dynamic baseline $B_D(t)$ is relative steady. The dynamic warning level $W_{DL}(t)$ is given by:

$$(8)\ W_{DL}(t) = 2\ B_D(t)$$

The dynamic alarm level $A_{DL}(t)$ is given by:

$$(9)\ A_{DL}(t) = 3\ B_D(t)$$

The static alarm level is defined a four times the initial baseline and thus given by:

$$(10)\ \text{static alarm level} = 4\ \text{initial baseline}.$$

Fig. 4B illustrates a graph 1' depicting a parameter $P_2$ (vibration levels (RMS) $P_2$ in one axis) (e.g. an Y axis) for a second pump depicted as function of time T.

The dynamic baseline $B_D(t)$ is illustrated. The dynamic warning level $W_{DL}(t)$ is given by:

$$(8)\ W_{DL}(t) = 2\ B_D(t)$$

The dynamic alarm level $A_{DL}(t)$ is given by:

$$(9)\ A_{DL}(t) = 3\ B_D(t)$$

The static alarm level is defined a four times the initial baseline and thus given by:

$$(10)\ \text{static alarm level} = 4\ \text{initial baseline}$$

It can be seen that the dynamic baseline $B_d(t)$, the dynamic warning level $W_{DL}(t)$ and the dynamic alarm level $A_{DL}(t)$ increases at time $T_1$ and after wards decreases
Fig. 4C illustrates a graph 1" depicting a parameter $P_3$ (vibration levels (RMS) $P_2$ in one axis) (e.g. an Z axis) for a pump depicted as function of time T.

The dynamic baseline $B_D(t)$ is illustrated. The dynamic warning level $W_{DL}(t)$ is given by:

$$(8)\ W_{DL}(t) = 2\ B_D(t)$$

The dynamic alarm level $A_{DL}(t)$ is given by:

$$(9)\ A_{DL}(t) = 3\ B_D(t)$$

The static alarm level is defined a four times the initial baseline and thus given by:

$$(10)\ \text{static alarm level} = 4\ \text{initial baseline}$$

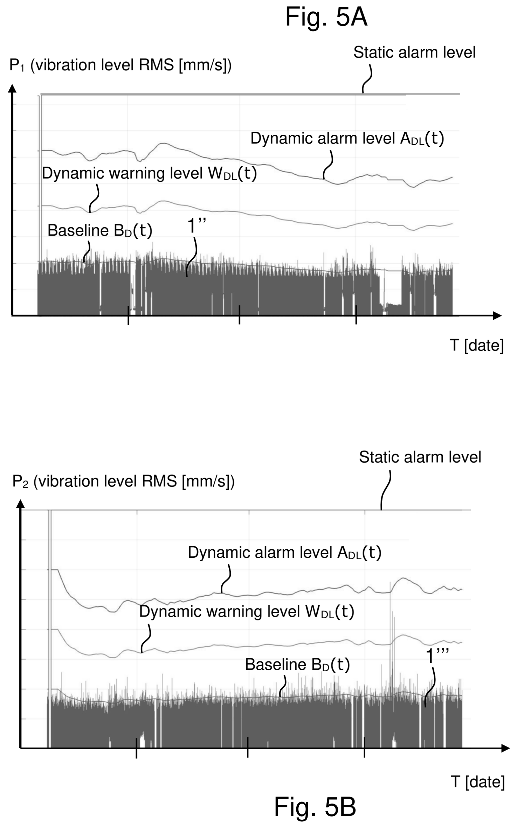

Fig. 5A illustrates a graph 1" depicting a parameter (vibration levels (RMS)) $P_1$ in one axis (e.g. an X axis) for a first pump depicted as function of time T.

The dynamic baseline $B_D(t)$ is relative steady. The dynamic warning level $W_{DL}(t)$ is given by:

$$(8)\ W_{DL}(t) = 2\ B_D(t)$$

The dynamic alarm level $A_{DL}(t)$ is given by:

$$(9)\ A_{DL}(t) = 3\ B_D(t)$$

The static alarm level is defined a four times the initial baseline and thus given by:

$$(10)\ \text{static alarm level} = 4\ \text{initial baseline}$$

Fig. 5B illustrates a graph 1''' depicting a parameter (vibration levels (RMS)) $P_2$ in one axis (e.g. an X axis) for a pump depicted as function of time T.

The dynamic baseline $B_D(t)$ is relative steady. The dynamic warning level $W_{DL}(t)$ is given by:

$$(8)\ W_{DL}(t) = 2\ B_D(t)$$

The dynamic alarm level $A_{DL}(t)$ is given by:

$$(9)\ A_{DL}(t) = 3\ B_D(t)$$

The static alarm level is defined a four times the initial baseline and thus given by:

$$(10)\ \text{static alarm level} = 4\ \text{initial baseline}$$

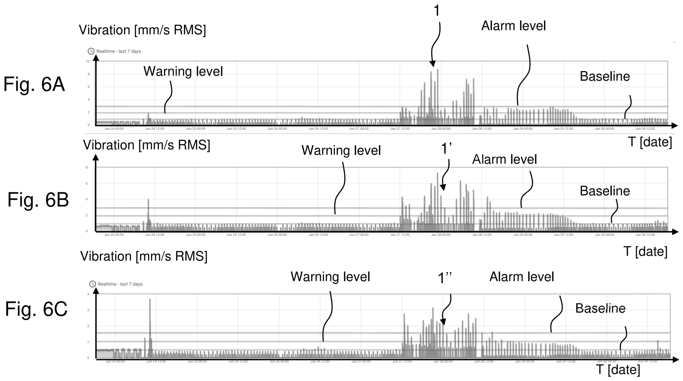

Fig. 6A illustrates a graph 1 depicting vibration (RMS) levels in a first axis for a first pump depicted as function of time. A baseline level, a warning level and an alarm level are indicated.

Fig. 6B illustrates a graph 1' depicting vibration (RMS) levels in a second axis for a first pump depicted as function of time. A baseline level, a warning level and an alarm level are indicated.

Fig. 6C illustrates a graph 1''' depicting vibration (RMS) levels in a third axis for a first pump depicted as function of time. A baseline level, a warning level and an alarm level are indicated.

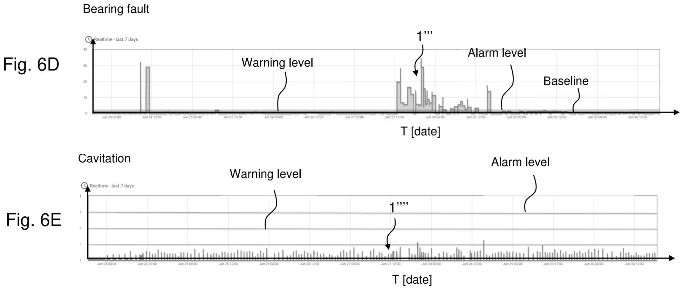

Fig. 6D illustrates a graph 1'''' depicting bearing fault of a pump depicted as function of time. A baseline level, a warning level and an alarm level are indicated.

Fig. 6E illustrates a graph 1''''' depicting cavitation in a pump depicted as function of time. A baseline level, a warning level and an alarm level are indicated.

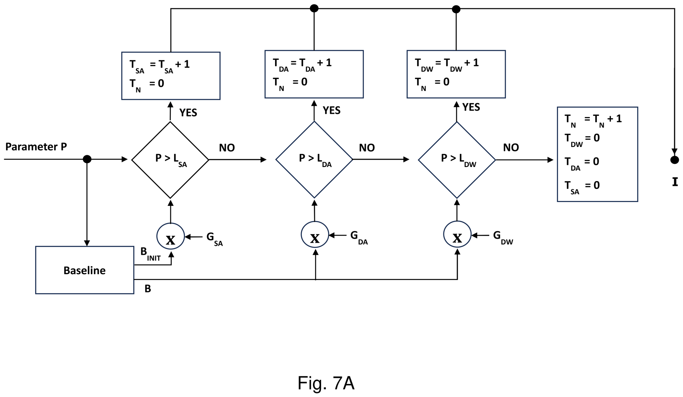

Fig. 7A illustrates a flow chart used to estimate health parameters by using a method according to the invention. A parameter P is measured in a rotating machine on a continuous or regular basis. An initial baseline value $B_{INIT}$ is determined on the basis of measurements during a predefined initial measurement period. In an embodiment, an initial baseline value $B_{INIT}$ is calculated as an average of the parameter P the initial measurement period. In an embodiment, the predefined initial measurement period is 5 minutes. In an embodiment, the predefined initial measurement period is 30 minutes. In an embodiment, the predefined initial measurement period is 2 hours. In an embodiment, the predefined time period is in the range 1-24 hours. In an embodiment, the predefined time period is in the range 1-6 hours. In an embodiment, the predefined time period is 1-2 days. In an embodiment, the predefined time period is 2-5 days.

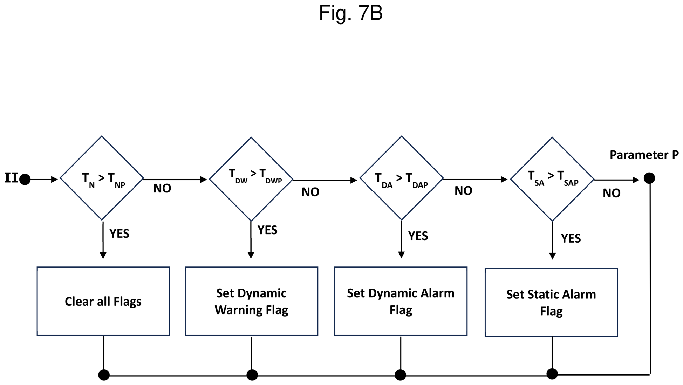

The symbols applied in Fig. 7A and Fig 7B are:

| | |
|---|---|
| P = | Parameter |
| B = | Baseline |
| $B_{INIT}$ = | Baseline Initial Value |
| $G_{DW}$ = | Gain, Dynamic Warning |
| $G_{DA}$ = | Gain, Dynamic Alarm |
| $G_{SA}$ = | Gain, Static Alarm |
| $L_{DW}$ = | Level, Dynamic Warning (= $G_{DW} \cdot B$) |
| $L_{DA}$ = | Level, Dynamic Alarm (= $G_{DA} \cdot B$) |
| $L_{SW}$ = | Level, Static Alarm (= $G_{SA} - B_{INIT}$) |
| $T_{DW}$ = | Time, Dynamic Warning |
| $T_{DA}$ = | Time, Dynamic Alarm |
| $T_{SA}$ = | Time, Static Alarm |
| $T_N$ = | Time, Normal |
| $T_{NP}$ = | Time for a Normal Period |
| $T_{DWP}$ = | Time for a valid Dynamic Warning Period |
| $T_{DAP}$ = | Time for a valid Dynamic Alarm Period |
| $T_{SAP}$ = | Time for a valid Static Alarm Period |

After the initial measurement period (during which an initial baseline value $B_{INIT}$ is established), additional measurements of the parameter P are conducted, and a corresponding baseline B is determined (on a continuous or regular basis) for the parameter P. The method comprises the step of:

a) calculating a static warning level $L_{SA}$ as the product between a gain factor $G_{SA}$ and the initial baseline $B_{INIT}$,
b) calculating a dynamic alarm level $L_{DA}$ as the product between a gain factor $G_{DA}$ and the baseline B,
c) calculating a dynamic warning level $L_{DW}$ as the product between a gain factor $G_{DW}$ and the baseline B,

After establishing the static warning level $L_{SA}$, the dynamic alarm level $L_{DA}$ and the dynamic warning level $L_{DW}$, these levels are being used to evaluate if a parameter is critical and an alarm or a warning should be generated.

If the parameter P exceeds the static warning level $L_{SA}$ (defined as $G_{SA}$ times the initial baseline $B_{INIT}$), a timer is started and the time $T_{SA}$ during which the parameter P exceeds the static warning level $L_{SA}$ is established.

If, on the other hand, the parameter P does not exceed the static warning level $L_{SA}$, the method determines if the parameter P exceeds the dynamic alarm level $L_{DA}$, a timer is started and the time $T_{DA}$ during which the parameter P exceeds the dynamic alarm level $L_{DA}$ is established.

If the parameter P does not exceed the dynamic alarm level $L_{DA}$, the method determines if the parameter P exceeds the dynamic warning level $L_{DW}$, a timer is started and the time $T_{DW}$ during which the parameter P exceeds the dynamic warning level $L_{DW}$ is established.

If the parameter does not exceed any of the levels ($L_{SA}$, $L_{DA}$, $L_{DW}$), the timers are set to zero so that

$$T_{DW} = 0, T_{DA} = 0 \text{ and } T_{SA} = 0.$$

If one or more of the levels ($L_{SA}, L_{DA}, L_{DW}$) are exceeded the method carries out one or more additional steps indicated by the symbol I.

Fig. 7B illustrates the remaining part of the flow chart shown in Fig. 7A. It can be seen that the steps of the method are continued from the symbol II.

If the time for a Normal Period $T_N$ during which the parameter P has been below the three levels ($L_{SA}, L_{DA}, L_{DW}$) exceeds the predefined time period (e.g. 2 hours) $T_{NP}$ all flags are cleared.

If the time $T_N$ does not exceed the predefined time period (e.g. 2 hours), the method determines if $T_{DW}$ exceeds the predefined time period (e.g. 2 hours) for a valid Dynamic Warning Period $T_{DWP}$. If $T_{DW}$ exceeds $T_{DWP}$, the Dynamic Warning Flag is set to zero.

If $T_{DW}$ does not exceeds $T_{DWP}$, the method determines if the time $T_{DA}$ exceeds the predefined time period (e.g. 10 min) for a valid Dynamic Alarm Period $T_{DAP}$. If $T_{DA}$ exceeds $T_{DAP}$, the Dynamic Alarm Flag is set to zero, however, if not, the method determines if the time $T_{SA}$ exceeds the predefined time period (e.g. 10 min) for a valid Static Alarm Period $T_{SAP}$. If $T_{SA}$ exceeds $T_{SAP}$, the Static Alarm Flag is set to zero and the method starts over again.

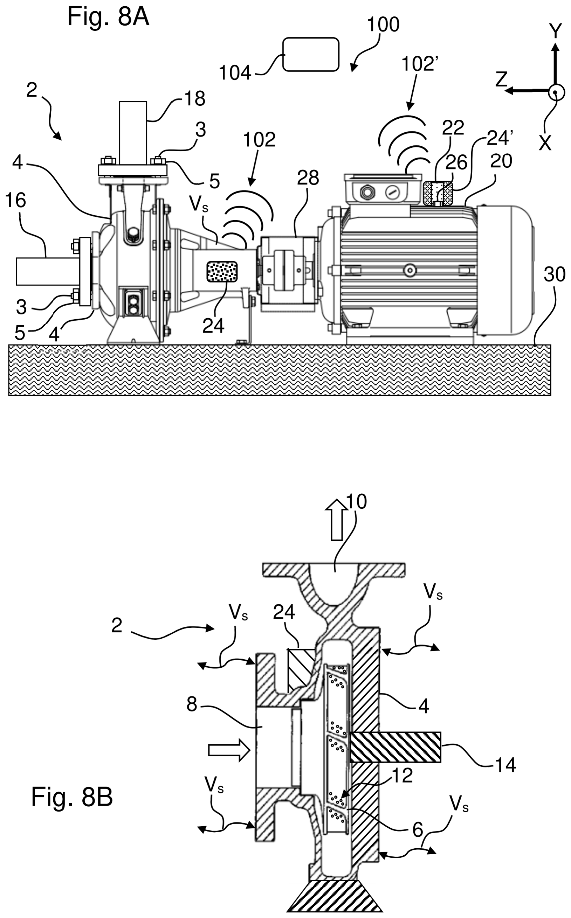

Fig. 8A illustrates a rotating machine according to the invention. The rotating machine is part of a pump system 100 according to the invention. The system 100 is designed for detecting cavitation of the pump 2 of the pump system 100. The pump system 100 comprises a first detection unit 24 arranged and configured to detect vibration of the pump housing 4. In an embodiment, the first detection unit 24 is attached to the pump housing 4. In an embodiment, the first detection unit 24 is attached to a structure that is mechanically connected to the pump housing 4.

In an embodiment, the first detection unit 24 is configured to detect vibrations $V_s$ in a first dimension along a first axis X and vibration signals in a second dimension along a second axis Y extending perpendicular to the first axis X. A Cartesian coordinate system having three axis X, Y, Z is shown in Fig. 1A. In an embodiment, the first detection unit 24 is configured to detect vibrations $V_s$ in a third dimension along a third axis Z extending perpendicular to the first axis X and the second axis Y.

In an embodiment, the first detection unit 24 is also configured to detect magnetic signals are generated by the motor 20.

The motor 20 is part of the pump 2 comprising the pump housing 4. The pump housing 4 has an inlet connected to an inlet pipe 16. The pump housing 4 has an outlet connected to an outlet pipe 18. The inlet pipe 16 is provided with a flange that is attached to a corresponding flange of the inlet by means of bolts 3 and nuts 5. Likewise, the outlet pipe 18 is provided with a flange that is attached to a corresponding flange of the outlet by means of bolts 3 and nuts 5.

The motor 20 is connected to an impeller (not shown) rotatably mounted in the pump housing 4 via a coupling 28. In an embodiment, the pump 2 rests on and is fixed to a base member 30.

A second detection unit 24' is attached to the outside of the motor 20. The second detection unit 24' is attached to an attachment structure 22 that is fixed to the motor 20 by means of bolts 26 that are screwed into threaded bores provided in the housing of the motor 20. Other mechanical structures may be used to attach the detection units 24, 24' to the outside of the motor 20, the pump housing 4 or a structure connected thereto. In an embodiment, the second detection unit 24' is placed centrally at the top portion of the housing of the motor 20. In an embodiment, the second detection unit 24' is placed centrally at a side portion of the housing of the motor 20. In an embodiment, the pump system 100 comprises a single detection unit 24, 24' only.

In an embodiment, the detection unit 24, 24' is detachably attached.

The pump system 100 is configured to process the signals detected by the detection unit 24, 24'. In an embodiment, the detection unit 24, 24' is configured to transmit data to an external receive, wherein the external receiver is configured to process the signals.

Fig. 8B illustrates a schematic cross-sectional view of a pump housing 4 of a pump 2 (a rotating machine) according to the invention. A pump housing 4 of a pump 2 of a pump system 100 according to the invention can be seen. The pump housing 4 comprises an inlet 8 and an outlet 10. The fluid to be pumped enters the pump housing 4 through the inlet 8 and leaves the pump housing 4 via the outlet 10. An impeller 6 is rotatably mounted in the pump housing 4 by using a shaft 14 protruding through an end wall of the pump housing. A sealing structure (not shown) is arranged and configured to seal the shaft against the opening in the end wall.

It can be seen that cavitation 12 is present in the impeller 6. The cavitation 12 is illustrated by small circles indicating vapor bubbles. The cavitation 12 causes vibrations Vs that are detected by a detection unit 24. In an embodiment, the detection unit 24 is detachably attached to the pump housing 4.

The impeller 6 is connected to a motor (not shown). In an embodiment, the motor is an electrically driven motor.

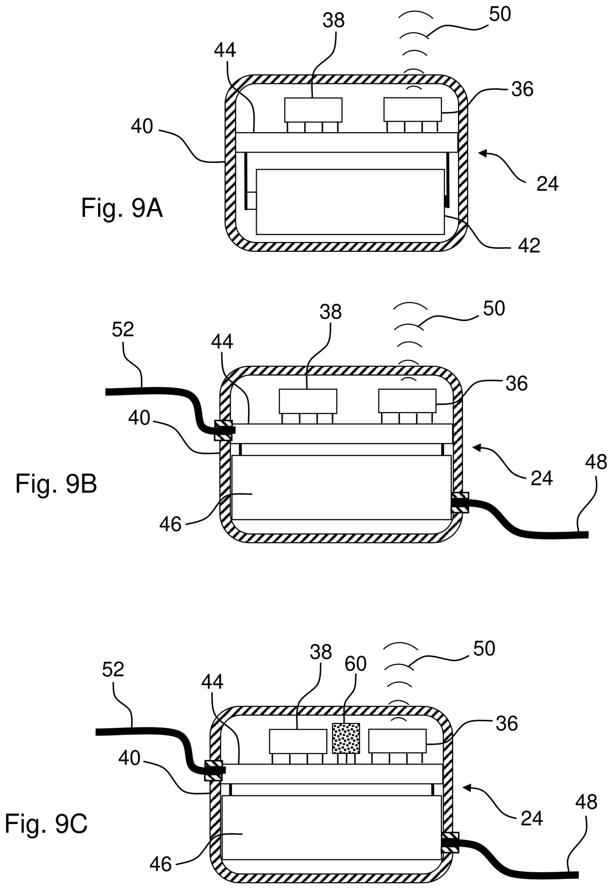

Fig. 9A illustrates a cross-sectional view of a detection unit of a rotating machine according to the invention. The detection unit 24 comprises a housing 40 configured to be attached to a motor of a pump. The detection unit 24 comprises a battery 42 for providing electrical power to the detection unit 24. The detection unit 24 comprises a printed circuit board 44 provided with a communication module 36. The communication module 36 is configured to communicate wirelessly with an external device (e.g. via a local network). In an embodiment, the detection unit 24 comprises a modem configured for sending digital data 50 wirelessly. In an embodiment, detection unit 24 comprises a Bluetooth radio module with built-in antenna.

The detection unit 24 comprises an accelerometer 38 arranged and configured to detect vibrations of the detection unit 24. Accordingly, when the detection unit 24 is attached to a motor, the accelerometer 38 ci capable of detecting the vibrations of the motor. In an embodiment, the accelerometer 38 is a multi-axis accelerometer configured to detect both the magnitude and the direction of the proper acceleration, as a vector quantity. In an embodiment, the accelerometer 38 is a two-axis accelerometer. In an embodiment, the accelerometer 38 is a three-axis accelerometer. In an embodiment, the accelerometer 38 is a single-axis accelerometer 38.

In an embodiment, the accelerometer 38 is a micromachined microelectromechanical systems (MEMS).

In an embodiment, the detection unit 24 comprises a control unit. In an embodiment, the control unit comprises a processing unit.

Fig. 9B illustrates a cross-sectional view of another detection unit of a rotating machine according to the invention. The detection unit 24 comprises a housing 40 configured to be attached to a rotatory machine such as a pump or motor. The detection unit 24 comprises a power supply 46 connected to a power cable 48 protruding from the housing 40.

The detection unit 24 comprises a printed circuit board 44 provided with a communication module 36. The communication module 36 is connected to an external device by using a data cable 52. The data cable 52 may be electronically connected to a control box of a pump. In an embodiment, the detection unit 24 comprises no communication module but is electrically connected to an external communication module (e.g. built into an external device such as a control box of a pump or a motor).

The detection unit 24 comprises an accelerometer 38 corresponding to the one shown and explained with reference to Fig. 9A. In an embodiment, the detection unit 24 comprises a control unit. In an embodiment, the control unit comprises a processing unit.

Fig. 9C illustrates a cross-sectional view of another detection unit 24 of a pump of a pump system according to the invention. The detection unit 24 basically corresponds to the one shown in and explained with reference to Fig. 9B. The detection unit 24, however, comprises a control unit 60.

In an embodiment, the control unit 60 is configured to:

- for at least one of the consecutive measurement periods determining a gain factor, wherein the gain factor is defined as the difference between the baseline level and a cavitation mean value, wherein the cavitation mean value is a mean value of the energy of the detected vibrations of the pump during the measurement period and
- conclude that cavitation is present in a pump during the measurement period if the gain factor is equal to or larger than a predefined minimum gain level.

**List of reference numerals**

| 1, 1', 1"1''', 1'''', 1''''' | Graph |
| 2 | Rotating machine (e.g. an electrically driven pump) |
| 3 | Bolt |
| 4 | Pump housing |
| 5 | Nut |
| 6 | Impeller |
| 8 | Inlet |
| 10 | Outlet |
| 12 | Cavitation |
| 14 | Shaft |
| 16 | Inlet pipe |
| 18 | Outlet pipe |
| 20 | Motor |
| 22 | Attachment structure |
| 24, 24' | Detection unit |
| 26 | Bolt |
| 28 | Coupling |
| 30 | Base member |
| 38 | Accelerometer |
| 40 | Housing of detection unit |

| 42 | Battery |
| 44 | Printed circuit board |
| 46 | Power supply |
| 48 | Power cable |
| 50 | Data (e.g. sent as wireless signals) |
| 52 | data cable |
| 60 | Control unit |
| 100 | System |
| 102, 102' | Data (e.g. warning or alarm signal) |
| 104 | External receiving member |
| X, Y, Z | Axis |
| T | Time |
| $T_1$ | First time |
| $T_2$ | Second time |
| $T_3, T_4$ | Time |
| $V_s$ | Vibration |
| $W_{DL}(t)$ | Dynamic warning level as function of time |
| $A_{DL}(t)$ | Dynamic alarm level as function of time |
| $B_D(t)$ | Dynamic baseline as function of time |
| E, E' | Extreme value |
| $\Delta$ | Predefined percentage (e.g. 50%) |
| $D_1, D_2, D_3, D_4$ | Duration of time interval |
| $P, P_1, P_2, P_3, P_4$ | Parameter |
| $C_1, C_2, C_3, C_4, C_5$ | Constant |

**Claims**

1. Method for generating a notification signal of rotating machine (2), the notification signal being a warning signal (102, 102') or an alarm signal (102, 102'), wherein the method comprising:

    - by using a detection unit (24) comprising an accelerometer (38) arranged and configured to detect vibrations and/or a detection unit (24) configured to detect magnetic signals determining an initial baseline ($B_{INIT}$) on the basis of a plurality of measurements of at least one parameter ($P, P_1, P_2, P_3$) of the rotating machine (2) detectable by using the accelerometer (38) or the detection unit (24), wherein the measurements are conducted during a measurement period (time interval) having a predefined duration,
    - calculating a warning level ($L_{DW}$) or an alarm level ($L_{SA}, L_{DA}$),
    - after having determined the initial baseline ($B_{INIT}$), conducting additional measurements of the parameter ($P_1, P_2, P_3$) of the rotating machine (2),
    - providing the warning signal (102, 102') or the alarm signal (102, 102') if the parameter ($P_1, P_2, P_3$) exceeds the warning level ($L_{DW}$) or the alarm level ($L_{SA}, L_{DA}$), respectively,

    **characterised in that** the method comprising:

    a) after having determined the initial baseline ($B_{INIT}$), continuously or regularly determining a dynamic baseline (B) on the basis of the measurements of the parameter ($P_1, P_2, P_3$) and
    b) calculating a warning level ($L_{DW}$) or an alarm level ($L_{SA}, L_{DA}$) on the basis of the dynamic baseline (B).

2. Method according to claim 1, wherein the method comprising application of an adaptive filter to remove one or more measurements of the parameter ($P_1, P_2, P_3$) categorised as extreme values (E, E' E") that differ more than a predefined level from the dynamic baseline (B).

3. Method according to claim 2, wherein the adaptive filter is a trimmed moving average or a winsorized moving average or a weighted moving average or a moving average with outlier detection.

4. Method according to claim 2, wherein if the time for a time period ($T_{DW}$) during which the parameter ($P, P_1, P_2, P_3$) has been below the warning level ($L_{DW}$), exceeds the predefined time period $T_{DWP}$, no warning signal (102, 102') is generated.

5. Method according to claim 2, wherein if the time for a time period ($T_{DA}$) during which the parameter ($P, P_1, P_2, P_3$) has been below the alarm level ($L_{DA}$), exceeds the predefined time period $T_{SAP}$, no alarm signal (102, 102') is generated.

6. Method according to claim 2, wherein if the time for a time period ($T_{SA}$) during which the parameter ($P, P_1, P_2, P_3$) has been below the static level ($L_{SA}$), exceeds the predefined time period $T_{SAP}$, no static alarm signal (102, 102') is generated.

7. Method according to claim 2, wherein if the time for a Normal Period ($T_N$) during which the parameter ($P, P_1, P_2, P_3$) has been below the warning level ($L_{DW}$) or the alarm level ($L_{SA}, L_{DA}$), respectively, exceeds the predefined time period $T_{NP}$, no alarm or warning is generated.

8. Method according to one of the preceding claims, wherein the parameter ($P_1, P_2, P_3$) is one of the following:

   a) unbalance,
   b) bearing fault detection,
   c) cavitation,
   d) vibration Root Mean Square with respect to a first axis (X) of the rotating machine (2),
   e) vibration Root Mean Square with respect to a second axis (Y) of the rotating machine (2), the second axis (Y) extending perpendicular to the first axis (X),
   f) vibration Root Mean Square with respect to a third axis (Z) of the rotating machine (2), the third axis (Z) extending perpendicular to the first axis (X) and the second axis (Y),
   g) Gear Mesh Frequency.

9. Method according to one of the preceding claims, comprising generation of a warning signal ($L_{DW}$, 102, 102') when a predefined number of measurements exceeding a level corresponding to a predefined first constant ($C_1$) times the baseline (B) are detected within a predefined period of time, wherein the predefined first constant ($C_1$) is larger than 1.

10. Method according to claim 9, wherein the method generates an alarm signal (102, 102') when a predefined number of measurements exceeding a predefined second constant ($C_2$) times the baseline (B) is detected within a predefined period of time, wherein the predefined second constant ($C_2$) is larger than the first predefined constant ($C_1$).

11. Method according to one of the preceding claims, wherein the method generates a static alarm when a predefined number of measurements exceeding a predefined third constant ($C_3$) times an initial baseline ($B_{INIT}$) is detected within a predefined period of time, wherein the predefined third constant ($C_3$) is larger than 2.

12. A rotating machine (2) configured to carry out the method according to one of the claims 1-11, the rotating machine (2) being configured for generating a notification signal being a warning signal (102, 102') or an alarm signal (102, 102'), wherein rotating machine (2) comprises a detection unit (24, 24') comprising an accelerometer (28) arranged and configured to detect vibrations ($V_s$) of the rotating machine (2) and/or a detection unit (24) configured to detect magnetic signals of the rotating machine (2),

   - applying the detection unit (24) to detect vibrations ($V_s$) and/or magnetic signals of the rotating machine (2), wherein the detection unit (24) or an external device (104) communicatively connected to the detection unit (24) is configured to:

      1) determine an initial baseline ($B_{INIT}$) on the basis of a plurality of measurements of a parameter ($P, P_1, P_2, P_3$) of the rotating machine (2), wherein the measurements are conducted during a measurement period having a predefined duration,
      2) calculate a warning level ($L_{DW}$) or an alarm level ($L_{SA}, L_{DA}$),
      3) after having determined the initial baseline ($B_{INIT}$), conduct additional measurements of the parameter ($P_1, P_2, P_3$) of the rotating machine (2),
      4) provide the warning signal (102, 102') or the alarm signal (102, 102') if the parameter ($P_1, P_2, P_3$) exceeds the warning level ($L_{DW}$) or the alarm level ($L_{SA}, L_{DA}$), respectively,

   **characterised in that** the detection unit (24) or an external device (104) communicatively connected to the detection unit (24) is configured to:

      a) after having determined the initial baseline ($B_{INIT}$), continuously or regularly determining a dynamic baseline (B) on the basis of the measurements of the parameter ($P_1$, $P_2$, $P_3$) and
b) calculating a warning level ($L_{DW}$) or an alarm level ($L_{SA}$, $L_{DA}$) on the basis of the dynamic baseline (B).

13. A system (100) comprising:

- a rotating machine (2) according to claim 12, wherein the detection unit(s) (24, 24') are configured to wirelessly send data (102, 102');
- an external receiving member (104) configured to receive data (102, 102') sent by the detection unit(s) (24, 24').

Fig. 1A

Fig. 1B

Fig. 2A

Fig. 2B

Fig. 3A

$P_1$

Static alarm level

Dynamic alarm level $A_{DL}(t)$

Dynamic warning level $W_{DL}(t)$

1''''

T

Dynamic baseline $B_D(t)$

$P_2$

1'''''

Initial baseline level

T

Dynamic baseline $B_D(t)$

Fig. 3B

Fig. 4A

$P_1$ (vibration level RMS [mm/s])

Static alarm level

Dynamic alarm level $A_{DL}(t)$

Dynamic warning level $W_{DL}(t)$

Baseline $B_D(t)$

1

T [date]

Fig. 4B

$P_2$ (vibration level RMS [mm/s])

Static alarm

Dynamic alarm level $A_{DL}(t)$

Dynamic warning level $W_{DL}(t)$

Baseline $B_D(t)$

1'

$T_1$

T [date]

Fig. 4C

$P_3$ (vibration level RMS [mm/s])

Static alarm

Dynamic warning level $W_{DL}(t)$

Dynamic alarm level $A_{DL}(t)$

Baseline $B_D(t)$

1''

T [date]

## Fig. 5A

P$_1$ (vibration level RMS [mm/s])

Static alarm level

Dynamic alarm level A$_{DL}$(t)

Dynamic warning level W$_{DL}$(t)

Baseline B$_D$(t)

1''

T [date]

Static alarm level

P$_2$ (vibration level RMS [mm/s])

Dynamic alarm level A$_{DL}$(t)

Dynamic warning level W$_{DL}$(t)

Baseline B$_D$(t)

1'''

T [date]

## Fig. 5B

Vibration [mm/s RMS]

Fig. 6A

Warning level

1

Alarm level

Baseline

T [date]

Vibration [mm/s RMS]

Fig. 6B

Warning level

1'

Alarm level

Baseline

T [date]

Vibration [mm/s RMS]

Fig. 6C

Warning level

1''

Alarm level

Baseline

T [date]

Bearing fault

Fig. 6D

1'''

Warning level

Alarm level

Baseline

T [date]

Cavitation

Fig. 6E

Warning level

Alarm level

1''''

T [date]

Fig. 7A

Fig. 7B

Fig. 8A

Fig. 8B

Fig. 9A

Fig. 9B

Fig. 9C

Europäisches
Patentamt

European
Patent Office

Office européen
des brevets

# EUROPEAN SEARCH REPORT

**Application Number**

EP 25 20 8625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/313043 A1 (HEYDRON PAUL H [US]) 23 October 2014 (2014-10-23) <br> * claim 1 * <br> * paragraph [0003] * <br> * paragraph [0015] - paragraph [0020] * <br> ----- | 1,3-7, 10-13 | INV. <br> G01H1/00 |
| X | US 2002/140566 A1 (HOLROYD TREVOR JAMES [GB]) 3 October 2002 (2002-10-03) <br> * paragraph [0001] * <br> * paragraph [0016] * <br> * paragraph [0023] * <br> ----- | 1,3-7, 9-12 | |
| X | US 2021/143762 A1 (HUNT LUCAS CHRISTOPHER [US] ET AL) 13 May 2021 (2021-05-13) <br> * paragraph [0015] - paragraph [0021] * <br> * paragraph [0041] * <br> * paragraph [0051] * <br> ----- | 1-8, 10-13 | |
| X | US 2011/193715 A1 (BIBELHAUSEN DAVID J [US] ET AL) 11 August 2011 (2011-08-11) <br> * paragraph [0022] - paragraph [0027] * <br> * paragraph [0047] * <br> * claims 36, 48 ,49 * <br> ----- | 1,3-7, 10-13 | TECHNICAL FIELDS SEARCHED (IPC) <br><br> G01H |

The present search report has been drawn up for all claims

| Place of search | Date of completion of the search | Examiner |
|---|---|---|
| The Hague | 11 March 2026 | Tympel, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 8625

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2026

| Patent document cited in search report | | | Publication date | Patent family member(s) | | Publication date |
|---|---|---|---|---|---|---|
| US 2014313043 | A1 | 23-10-2014 | US | 8803698 | B1 | 12-08-2014 |
| | | | US | 2014313043 | A1 | 23-10-2014 |
| US 2002140566 | A1 | 03-10-2002 | GB | 2376299 | A | 11-12-2002 |
| | | | US | 2002140566 | A1 | 03-10-2002 |
| US 2021143762 | A1 | 13-05-2021 | CN | 112781843 | A | 11-05-2021 |
| | | | EP | 3819608 | A1 | 12-05-2021 |
| | | | JP | 7646325 | B2 | 17-03-2025 |
| | | | JP | 2021076597 | A | 20-05-2021 |
| | | | US | 2021143762 | A1 | 13-05-2021 |
| US 2011193715 | A1 | 11-08-2011 | US | 2008079598 | A1 | 03-04-2008 |
| | | | US | 2011193715 | A1 | 11-08-2011 |

EPO FORM P0459

For more details about this annex : see Official Journal of the European Patent Office, No. 12/82